# EUROPÄISCHE PATENTSCHRIFT

(11) **EP 3 403 758 B1**
(45) Veröffentlichungstag und Bekanntmachung des Hinweises auf die Patenterteilung: **29.01.2020**
(21) Anmeldenummer: 18000436.8
(22) Anmeldetag: 08.05.2018
(51) Int. Cl.: B23Q 1/28

(54) **EINSTELLBARER AUFSATZADAPTER**
ADJUSTABLE ATTACHMENT ADAPTER
ADAPTATEUR RÉGLABLE

(30) Priorität: 09.05.2017 DE 102017004403
(43) Veröffentlichungstag der Anmeldung: 21.11.2018
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang

(56) Entgegenhaltungen:
- EP-B1- 1 228 321
- JP-U- S56 101 011
- US-A- 5 386 769
- US-A1- 2013 048 442
- US-A1- 2015 217 978

## Beschreibung

Die Erfindung betrifft eine Brems- und/oder Klemmvorrichtung für eine gegenüber einem Grundkörper geführte Welle mit einer Betätigungsbaugruppe und mit einer Wellenanbindungsbaugruppe.

Aus der DE 10 2008 020 518 C1 und US 2015/217978 A1 sind Brems- und/oder KlemmVorrichtungen für Wellen bekannt, bei denen um die Welle herum z.B. zehn auf Reibgehemme wirkende Schiebekeilgetriebe angeordnet sind. Die Schiebekeile werden mittels Pneumatikzylinder verstellt, um die einzelnen Bremsbacken gegen die Welle zu pressen. Diese Konstruktion hat einen großen Bauraumbedarf und wirkt direkt auf die Welle.

Die EP 1 228 321 B1 beschreibt eine Klemm- und/oder Bremsvorrichtung zum Klemmen und/oder Bremsen einer Welle. Die Welle wird dabei von einem Grundkörper umgeben. Der Grundkörper umfasst einen äußeren Ring, einen inneren Ring und zwei zwischen den Ringen angeordnete flache felgenartige Wandungen. Die Ringe und die Wandungen schließen einen Druckraum ein. Bei belüftetem Druckraum ist der innere Ring radial an der Welle festgeklemmt. Wird der Druckraum mit einem Druckmittel beschickt, beulen die Wandungen, wodurch der innere Ring die Welle freigibt.

Der vorliegenden Erfindung liegt die Problemstellung zugrunde, eine derartige Brems- und/oder Klemmvorrichtung zu entwickeln, die auch bei einem großen Durchmesser eine geringe Baubreite aufweist, aus wenigen Bauteilen besteht und zudem einstellbar, einfach, sicher und wartungsfrei funktioniert.

Diese Problemstellung wird mit den Merkmalen des Hauptanspruchs gelöst. Dabei weist die Betätigungsbaugruppe ein Spaltgehäuse auf, das eine Anbauzone und eine bereichsweise elastisch beulbare Biegezone mit zwei durch einen Spaltraum getrennten Biegeplatten hat. Die Biegeplatten weisen in zwei einander gegenüberliegenden Klemmzonen jeweils Zangenbacken mit Reibflächen auf, deren Flächennormalen nach innen gerichtet sind. Zwischen den Biegeplatten liegt ein abgedichteter Druckraum, der zum elastischen Auseinanderdrücken der Reibflächen mit einem Druckmedium befüllbar ist. Mindestens eine Zangenbacke ist ein an der jeweiligen Biegeplatte in der Klemmrichtung der Vorrichtung einstellbar angeordneter - einen axial abstehenden Kragring aufweisender - fixierbarer Verstellring.

Die Wellenanbindungsbaugruppe weist einen Kupplungsbereich auf, der zwei voneinander beabstandete Reibflächen hat, deren Flächennormalen nach außen weisen. Die Wellenanbindungsbaugruppe weist einen Wellenanbindungsbereich auf. Der Wellenanbindungsbereich ist entweder direkt oder indirekt über einen Spannmechanismus am Kupplungsbereich angeordnet. Bei entlastetem Druckraum sind die Reibflächen der Betätigungsbaugruppe an den Reibflächen der Wellenanbindungsbaugruppe unter Bereitstellung der Klemm- und/oder Bremskraft anlegbar.

Der Gegenstand der vorliegenden Erfindung ist eine mindestens zweiteilige Brems- und/oder Klemmvorrichtung für Wellen. Das eine Teil wird als Adapter auf die Welle montiert und an dieser festgeklemmt oder festgeschraubt, um mit dieser zu rotieren. Es hat beispielsweise einen radial abstehenden Klemmflansch. Das andere Teil ist eine Art von Zange, die an einem ortsfesten, z.B. die vorgenannte Welle lagernden Maschinenteil befestigt ist. Die Zange hat zwei an je einer Biegeplatte angeordnete z.B. ringförmige Zangenbacken, mit denen sie die Stirnseiten des wellenseitigen Flansches lose umfassen oder drehfest umgreifen kann. Die die Welle bremsenden oder klemmenden Vorrichtungsteile liegen nicht auf der Außenwandung der Welle an, d.h. die Arbeitsfuge der Brems- und/oder Klemmvorrichtung ist identisch mit der Wandung der Welle selbst.

Die die Zangenbacken tragenden Biegeplatten der Vorrichtung lassen sich vereinfacht als zwei Tellerfedern beschreiben, deren beiden Innenränder einander zugewandt sind, während die im Durchmesser größeren Außenränder in Axialrichtung weit auseinanderliegen. Zwischen die Innenränder, die eine Klemmzone bilden, wird der Klemmflansch eingelegt. Werden nun die Außenränder, die die Anbauzone darstellen, in Axialrichtung aufeinander zubewegt, klemmen die im Durchmesser kleineren Innenränder den Klemmflansch zum Halten federgespannt zangenartig ein. Die Tellerfedern werden bei der Herstellung im Bereich der Außenränder aneinander angeformt, sodass sich der Abstand der Außenränder nicht mehr ändern lässt. Um nun den Klemmflansch wieder freizugeben, werden die Tellerfedern mit Öldruck auseinandergepresst. Die Innenränder lösen sich vom Klemmflansch. Die bisher zum Klemmen wenig vorgespannten Tellerfedern werden somit zum Lösen noch stärker gespannt bzw. verformt.

Alternativ lässt sich die Vorrichtung auch so gestalten, dass der Klemmflansch in der Bohrung eines rotierenden Ringes angebracht wird, während die ortsfest gelagerte Zange räumlich innerhalb des rotierenden Ringes dessen nach innen kragenden Klemmflansch umgreift.

Von den Zangenbacken sitzt mindestens eine axial verstellbar an einer tragenden Biegeplatte. Die Verstellfuge kann ein Gewinde oder ein anderes Profil sein, das eine axiale Verstellung in Richtung der Klemm- oder Lösekraft der Vorrichtung ermöglicht. Durch die Verstellbewegung kann die Klemmkraft pro Vorrichtung individuell eingestellt oder zu Wartungs- und Reparaturzwecken ggf. nachgestellt werden. Zusätzlich sind in der Verstellfuge separate Mittel vorgesehen, die nach der Ein- oder Verstellung des oder der Zangenbacken letzteren oder letztere gegenüber der einzelnen tragenden Biegeplatte den vorhandenen Verstellfreiheitsgrad reversibel oder irreversibel blockieren.

Weitere Einzelheiten der Erfindung ergeben sich aus den Unteransprüchen und der nachfolgenden Beschreibung mehrerer schematisch dargestellter Ausführungsformen.
- Figur 1:: perspektivische Ansicht einer Brems- und/oder Klemmvorrichtung mit einer auf einem Doppelradialspannflansch basierenden Wellen-Naben-Verbindung;
- Figur 2:: Teilquerschnitt zu Figur 1;
- Figur 3:: Teilquerschnitt einer Brems- und/oder Klemmvorrichtung mit gestufter Welle;
- Figur 4:: Teilquerschnitt durch eine Wellen-Naben-Verbindung mit Verdrängerspannhülse, vergrößert;
- Figur 5:: Teilquerschnitt durch eine Wellen-Naben-Verbindung mit Ringfederspannsatz, vergrößert;
- Figur 6:: Teilquerschnitt zu Figur 1, jedoch versetzt zum Schnitt aus Figur 2;
- Figur 7:: Teilquerschnitt durch einen Schraubring mit Radialsteg, vergrößert;
- Figur 8:: Teilquerschnitt wie Figur 7, jedoch mit Biegeplatte und deformiertem Radialsteg, vergrößert;
- Figur 9:: Teilquerschnitt durch einen Schraubring mit Stahlkugel, vergrößert unbetätigt;
- Figur 10:: Teilquerschnitt wie Figur 9, jedoch blockiert, vergrößert;
- Figur 11:: Teilquerschnitt durch einen Schraubring mit Verdrängungskörper, vergrößert, unbetätigt;
- Figur 12:: Teilquerschnitt wie Figur 11, jedoch blockiert, vergrößert;
- Figur 13:: Teilquerschnitt durch einen Schraubring mit Spreizschraube, vergrößert, unbetätigt;
- Figur 14:: Stirnansicht mit zu Figur 13;
- Figur 15:: Draufsicht mit Teilschnitt zu Figur 14.

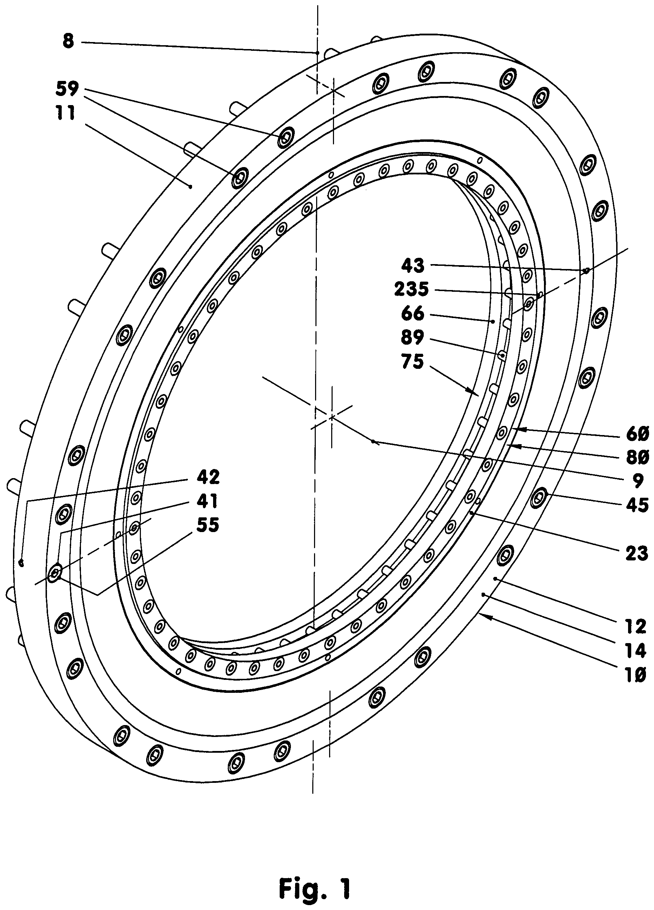

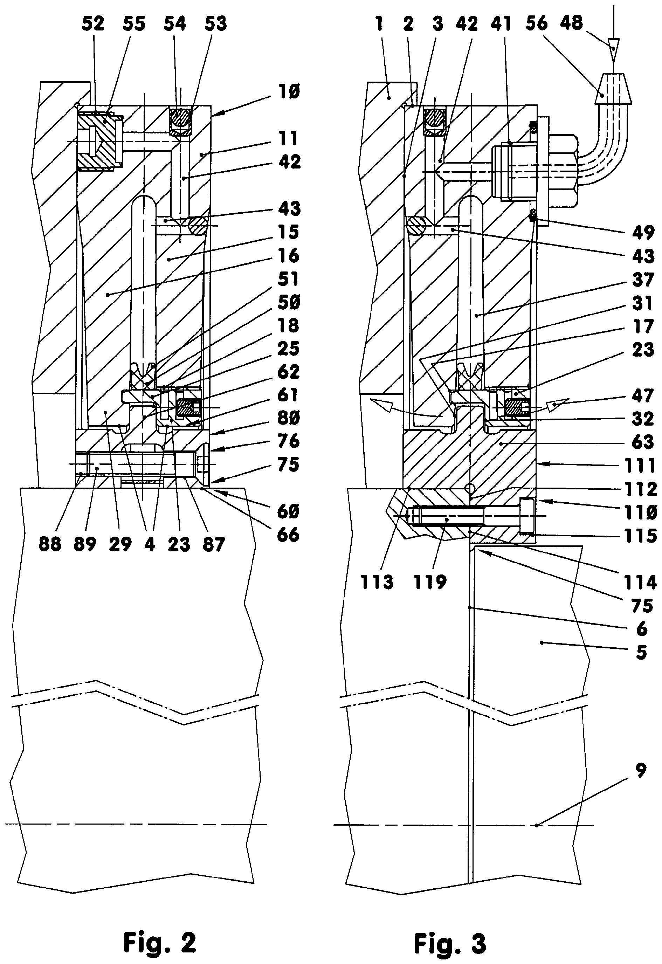

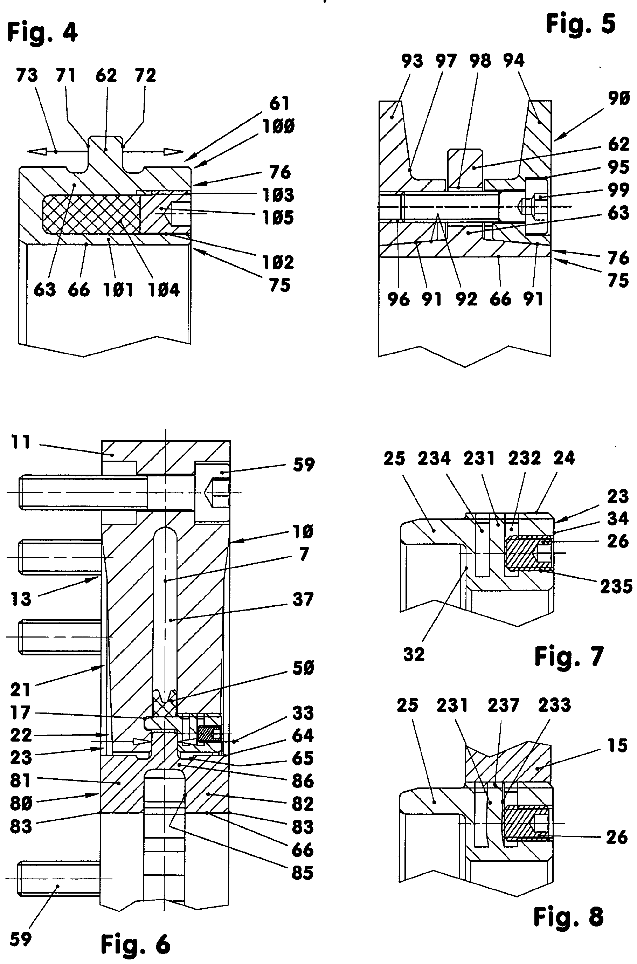

Die Figur 1 zeigt die Brems- und/oder Klemmvorrichtung ohne den tragenden maschinenseitigen Grundkörper (1), vgl. Figur 2 oder 3, und ohne die abzubremsende und/oder festzuklemmende Welle (5). Die außenliegende Betätigungsbaugruppe (10) hat eine Rückseite, über die sie mittels der Befestigungsschrauben (59) am Grundkörper (1) angeschraubt wird, vgl. auch Figur 6. Die Betätigungsbaugruppe (10) umgibt eine Wellenanbindungsbaugruppe (60), die einen Klemmflansch (62) an der Welle (5) adaptiert. Die Betätigungsbaugruppe (10) hat ein elastisches Spaltgehäuse (11), das mit seinen Zangenbacken (23, 29) - beim Bremsen oder Klemmen - zangenartig an dem Klemmflansch (62) anliegt. Einer der Zangenbacken (23) ist als ein- und/oder nachstellbarer Schraubring ausgebildet. Das Spaltgehäuse (11) umschließt zusammen mit einem Dichtring (50) einen Druckraum (37). Wird Letzterer mit einem gasförmigen, flüssigen oder gelartigen Druckmittel beaufschlagt, löst sich die zangenartige Umklammerung des Klemmflansches (62).

Der Druckraum (37) hat ein Volumen, das kleiner ist als 12,5 Prozent des Hüllvolumens der Betätigungsbaugruppe (10). Das Hüllvolumen der in den Figuren dargestellten Variante, entspricht einem gegebenen Volumen eines Rohrkörpers, der als Rohrlänge die Vorrichtungsbreite, als Außendurchmesser den äußeren Vorrichtungsdurchmesser und als Innendurchmesser den minimalen Innendurchmesser der Biegeplatte (15) hat.

Die Betätigungsbaugruppe (10) weist ein ring- bzw. rohrförmiges Spaltgehäuse (11) auf, das den z.B. schmalspaltigen ringförmigen Druckraum (37) umschließt. Das Spaltgehäuse (11) ist im unverformten Zustand im Wesentlichen eine ebene Scheibe mit einem Innendurchmesser von z.B. ca. 280 mm und einem Außendurchmesser von z.B. 388 mm. Die maximale Dicke der Scheibe liegt z.B. bei 22 mm. Das Spaltgehäuse (11) ist aus einem Vergütungsstahl, z.B. 42CrMoS4, gefertigt. Es ist in drei Bereiche (13, 21, 22), vgl. Figur 6, aufgeteilt, die in Radialrichtung aneinander anschließen. Der innere Bereich sind die Klemmzonen (22). An sie schließt sich jeweils eine in Radialrichtung weiter außenliegende Biegezone (21) an. Beide Biegezonen (21) münden in einen äußeren Bereich, also die Anbauzone (13).

Das Spaltgehäuse (11) wird zur Herstellung des Spaltraumes (37) von seiner zentralen Bohrung (4) aus mittig zwischen den Stirnseiten ausgefräst. Dazu wird z.B. ein Scheibenfräser verwendet. Die ausgefräste, z.B. 38,7 mm tiefe Nut hat eine Spaltbreite von z.B. 4 mm. Der rinnenförmige Nutgrund hat hier einen Radius von 2 mm.

Die Anbauzone (13), in die der Spaltraum (37) nicht oder nur 1 bis 10 mm hineinragt, hat z.B. beidseitig eine zumindest bereichsweise plane Stirnfläche, über die das Spaltgehäuse (11) an einer Anbaufläche (3) des Grundkörpers (1) anlegbar ist, vgl. auch Figuren 3 und 2. Sie weist auf einem Durchmesser von z.B. 370 mm alle 30 Winkelgrade eine aus zwei Senk- oder Doppelsenkbohrungen (45) bestehende Bohrungsgruppe auf. Diese Durchgangsbohrungen haben an einem oder an beiden Enden jeweils eine Senkung nach DIN 974. Die Senk- oder Doppelsenkbohrungen (45) der einzelnen Bohrungsgruppe sind gegeneinander um 10 Winkelgrade versetzt angeordnet. Zwischen mindestens zwei benachbarten Bohrungsgruppen befindet sich eine Zulauf- oder eine Verschlussstopfengewindebohrung (41). Die Bohrungen (41) liegen sich innerhalb der Betätigungsbaugruppe (10) z.B. auf verschiedenen Durchmessern diametral gegenüber und sind zugleich auf unterschiedlichen Stirnseiten (12, 14) der Anbauzone (13) angeordnet, vgl. Figuren 2 und 3.

Gemäß der Figur 3 befindet sich in der Anbauzone (13) mindestens eine Zulaufgewindebohrung (41) auf der Vorderseite (12) der Betätigungsbaugruppe (10). Das hier verwendete M10-Feingewinde nimmt nach Figur 3 - nur beispielhaft - einen Hydraulikadapter (56) auf. Alternativ kann die Zulaufgewindebohrung (41) mit ihrem Schneidring (49) und dem an ihm anliegenden Dichtring auch auf der Rückseite der Betätigungsbaugruppe (10) liegen, vgl. Figur 1. In diesem Fall liegt der Zulaufgewindebohrung (41) - in Figur 1 nicht dargestellt - eine druckmittelführende Bohrung im Grundkörper (1) gegenüber. Der Schneidring (49) unterstützt hier die Dichtwirkung zwischen der Anbaufläche (3) und der Rückseite der Betätigungsbaugruppe (10).

Die Zulaufgewindebohrung (41), vgl. Figuren 2 und 3, mündet in eine radiale Verteilbohrung (42). Nach außen hin ist diese Verteilbohrung (42) durch eine Klemmbüchse (53) verschlossen. In die Bohrung der Klemmbüchse (53) ist eine Stauchkugel (54) eingestemmt, die die Klemmbüchse (53) in der einzelnen radialen Verteilbohrung (42) öl- oder gasdicht dauerhaft fixiert. Die radiale Verteilbohrung (42) trifft z.B. senkrecht auf eine axiale Verteilbohrung (43), die in den Druckraum (37) mündet. Die axiale Verteilbohrung (43) ist zur Anbaufläche (3) hin mit einer Stauchkugel dicht verschlossen.

Die Verteilbohrungen (42, 43) haben hier einen Durchmesser von 3 mm. Das über den Hydraulikadapter (56) einströmende Hydrauliköl, z.B. ein Öl vom Typ HLP 46 nach DIN 51524, Teil 2, das bei 40° Celsius eine Viskosität von 46 ± 2 mm²/s aufweist, verteilt sich schnell im Druckraum (37).

Nach Figur 2 befindet sich in der Anbauzone (13) zudem mindestens eine Verschlussstopfengewindebohrung (52), die ebenfalls in eine Vertikalbohrung (42) mündet und von dort aus über eine axiale Verteilbohrung (43) mit dem Druckraum (37) verbunden ist. Nach außen hin sind diese Verteilbohrungen in der gleichen Weise verschlossen, wie die Verteilbohrungen des Zulaufs.

Die beiden an die Anbauzone (13) angeformten Biegeplatten (15, 16) stellen die elastische Biegezone (21) dar. Die beidseits des Spaltraumes (37) gelegenen, elastisch verformbaren Biegeplatten (15, 16) verjüngen sich - bezüglich ihrer Wandstärke - von außen her in Richtung der zentralen Mittellinie (9). Ihre Wandstärke verringert sich im Ausführungsbeispiel von z.B. 9 auf 6,2 und 7,5 mm, wobei die dickere Biegeplatte (15) den einstellbaren Schraubring (23) trägt. Die Formsteifigkeit der Biegeplatten (15, 16) nimmt somit in Richtung der Klemmzone (22) nahezu stetig ab. Die Übergänge zwischen den Zonen (13) und (21) sind beispielsweise mit großen Radien ausgerundet. Die Biegezone (21) ist gegenüber der Anbauzone (13) zurückgenommen, um die Verformung der Biegezone (21) nicht in die zwischen dem Grundkörper (1) und der Anbauzone (13) gelegene Einbaufuge einzutragen.

Die Biegeplatten (15, 16) der Biegezone (21) gehen zur jeweiligen Wellenanbindungsbaugruppe (60) hin in die beiden Klemmzonen (22) über, die die umlaufenden Zangenbacken (23, 29) darstellen. Bei der nach den Figuren 2 und 3 linken Biegeplatte (16) ist der Zangenbacken (29) zugleich ein Teil der Biegeplatte (16). Allerdings ist der Zangenbacken (29) räumlich durch eine z.B. 1,5 mm tiefe und z.B. 2,3 mm breite Axialnut (17) von der Biegezone (21) abgesetzt.

Der Zangenbacken (29) hat innerhalb der Axialnut (17) eine plane Reibfläche (31). Die Reibfläche (31) hat im Ausführungsbeispiel einen mittleren Radius von 142,3 mm. In der Klemmzone (22) beträgt die maximale Breite der Reibfläche (31) z.B. 6 mm.

Die Biegeplatte (15) ist in Radialrichtung z.B. 6,2 mm kürzer als die Biegeplatte (16). Zudem endet sie in Richtung der Welle (5) in einem Innengewinde (18).

An der Biegeplatte (15) sitzt als Zangenbacken (23) ein Schraubring. Letzterer ist im Wesentlichen ein kurzer rohr- oder ringförmiger Körper, der zur Biegeplatte (15) hin ein Außengewinde (24) aufweist. Zudem ist am Schraubring (23) ein Kragring (25) angeformt, der im montierten Zustand des Zangenbackens (23) in die Axialnut (17) der Biegeplatte (15), z.B. mit allseitigem Spiel, hineinragt. Bei betätigter Klemmung ist zumindest ein axiales Spiel von mindestens 0,1 mm zwischen dem Grund der Axialnut (17) und dem freien stirnseitigen Ende des Kragringes (25) erforderlich. Werden sehr hohe Öldrücke benutzt, kann es notwendig sein, dass die Bohrungswandung des Kragringes (25) auf der inneren Nutwandung der Axialnut (17) aufliegt. Die innere Nutwandung ist die Nutwandung mit dem kleineren Durchmesser.

Innerhalb des Kragringes (25) bildet die zum Spaltraum (37) hin orientierte Stirnfläche des Zangenbackens (23) eine plane Reibfläche (32). Die Abmessungen der Reibfläche (32) entsprechen denen der Reibfläche (31).

Der Schraubring bzw. Zangenbacken (23) hat eine radiale Ausdehnung von z.B. 7,5 mm bei einer axialen Länge von z.B. 12,9 mm. Der axial überstehende Kragring (25) ragt 5,4 mm über die Reibfläche (32) über. Die Wandstärke des am Schraubring (23) angeformten Kragringes (25) beträgt z.B. 2,2 mm. Die radiale Außenwandung des Kragringes (25) ist am freien Ende z.B. mit einer 15-Winkelgrad-Fase ausgestattet.

Nach Figur 2 weist der Schraubring (23) in seiner rechten Stirnseite mehrere, z.B. nach Figur 1 acht, Gewindebohrungen (235, 245 oder 265) auf. Über mindestens zwei dieser Gewindebohrungen wird der Schraubring (23) - nach der Montage des Dichtringes (50) - beispielsweise mittels eines Zapfen- bzw. Stirnlochschlüssels in das Innengewinde (18) der Biegeplatte (15) geschraubt. Der Einschraubvorgang ist beendet, wenn die Reibfläche (32) des Schraubrings (23) gegenüber der Reibfläche (31) des Zangenbackens (29) einen vorgegebenen Abstand hat. Dieser Abstand wird entsprechend der gewählten Montagemethode entweder mit vorgegebenen Prüfmitteln oder vorhandenen Meßmitteln bestimmt. Prüfmittel sind hier beispielsweise Parallelendmaße oder Fühlerlehren, während die Messmittel Messuhren oder 3D-Messgeräte sind.

Nach den Figuren 2, 3, 6, 7 und 8 weist der Schraubring (23) zwischen der Reibfläche (32) und der äußeren Stirnfläche (34) zwei radial von außen eingearbeitete Radialnuten (232, 234) auf. Die z.B. als geschlossene Umlaufnuten ausgeführten - zueinander parallel ausgerichteten - Radialnuten (232) und (234) haben bei einer Breite von z.B. 1,2 mm eine Tiefe von z.B. 5,5 mm. Zwischen beiden Radialnuten bleibt ein z.B. ebenfalls umlaufender Radialsteg (231) stehen. Er hat eine Wandstärke von z.B. 1,3 mm. Die radiale Außenseite des Radialstegs (231) ist Teil des Außengewindes des Schraubringes (23). Somit ist der Radialsteg (231) z.B. eine dünne ringförmige Scheibe mit Außenverzahnung.

Im Schraubring (23) ist z.B. in jeder Gewindebohrung (235), gemäß der Figuren 7 und 8, ein Gewindestift (26) - vom Typ Gewindestift mit Kegelkuppe nach DIN EN ISO 4027 - eingeschraubt. Vor dem Fixieren des Schraubrings (23) liegt die Kegelkuppe des Gewindestifts (26) kraftfrei am Radialsteg (231) an, vgl. Figur 7.

Sobald der Schraubring (23) bei der Montage seine Einschraubsollposition im Innengewinde (18) erreicht hat, werden zur Verdrehsicherung des Schraubrings (23) gegenüber der Biegeplatte (15) die Gewindestifte (26) angezogen. Dabei pressen die Gewindestifte (26) den Radialsteg (231) über seine Abstützflanke (233) jeweils partiell unter einer beulenden elastischen und/oder plastischen Verformung in Richtung des Kragrings (25), vgl. Figur 8. Unter der Last der einzelnen Gewindestifte (26) verspannt sich das Außengewinde (237) des Radialstegs (231) gegenüber dem Innengewinde (18) der Biegeplatte (15).

Nach einem Lösen aller Gewindestifte (26) lässt sich der Schraubring (23) gegenüber der Biegeplatte (15) wieder verdrehen, so dass während des Lebenszyklus der Brems- und/oder Klemmvorrichtung der Schraubring (23) mehrfach ein- oder verstellt werden kann.

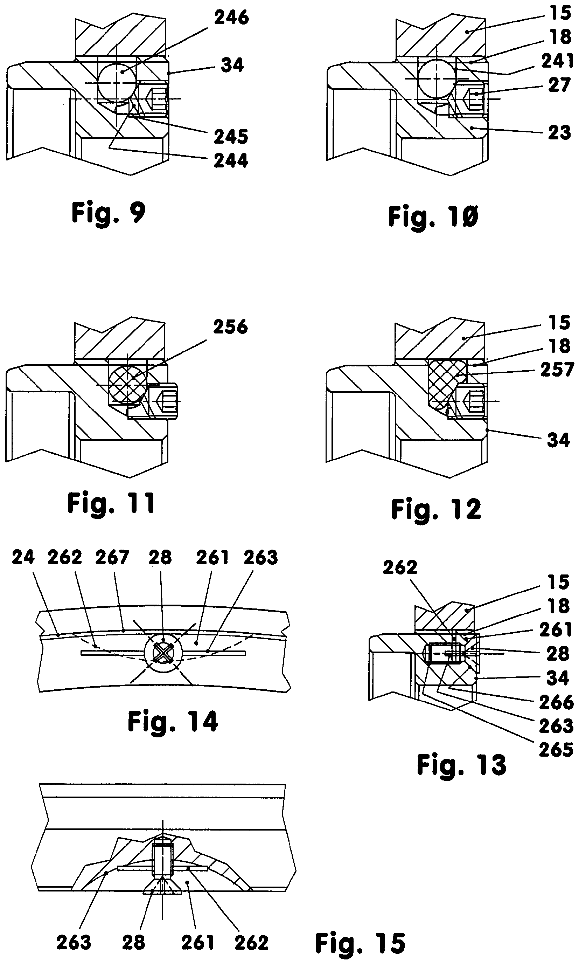

In einer Variante zur Ausführung nach den Figuren 7 und 8 können die Radialnuten und der Radialsteg beispielsweise partiell nur an den Stellen gestaltet sein, an denen sich die Gewindestifte (26) befinden. Eine entsprechende Radialnut hat dann eine Form, wie sie zur Variante nach Figur 14 beschrieben wird.

Die Figuren 9 und 10 zeigen eine Variante des Schraubringes (23), bei der zur Herstellung der Verdrehsicherung eine formsteife, starre Kugel, z.B. mit Hilfe eines spitz zulaufenden Gewindestifts (27), in das Innengewinde (18) der Biegeplatte (15) gestaucht wird. Dazu hat der Schraubring (23) pro Verdrehsicherungsstelle bzw. pro Gewindestift (27) eine Radialbohrung (241), die die - den Gewindestift (27) aufnehmende - Gewindebohrung (245) entweder schneidet oder in einem Abstand kreuzt, der kleiner ist als der halbe Kerndurchmesser des Gewindestifts (27). Die Radialbohrung (241) hat einen Innendurchmesser, der 0,1 bis 0,2 mm größer ist, als die in diese Radialbohrung (241) einzulegende Stahlkugel (246). Die Tiefe der Radialbohrung (241) ist so gewählt, dass die Kugelmitte nach der Orientierung der Figuren 9 und 10 immer oberhalb der Mittellinie des Gewindestifts (27) liegt.

Nach Figur 9 ist der Gewindestift (27), ein M3-Gewindestift mit Spitze nach DIN EN ISO 4027, z.B. 3 mm lang. Sofern seine äußere, plane Stirnfläche nahezu bündig mit der axialen Stirnfläche (34) des Schraubringes (23) ist, liegt jede mit Schmierfett in der Radialbohrung (241) provisorisch fixierte Stahlkugel (246), nach Figur 9, unterhalb des Innengewindes (18). Demnach lässt sich der Schraubring (23) im Innengewinde (18) ohne größeren Widerstand mit Handkraft verdrehen.

Die Figur 10 zeigt den im Innengewinde (18) blockierten Schraubring (23). Durch das Einschrauben des Gewindestifts (27) hat dessen formsteife, ggf. partiell gehärtete Kegelspitze (244) die Stahlkugel (246) in das Innengewinde (18) gepresst. Dabei wird das Innengewinde in der Kontaktstelle plastisch verformt. Die Stahlkugel durchdringt die Kernbohrungshüllfläche des Innengewindes (18). Die als Umlenkkörper benutzte Stahlkugel (246) bildet zusammen mit der Kegelspitze (244) getriebetechnisch ein Keilgetriebe.

Gemäß den Figuren 11 und 12 wird die Kugel (246) durch einen verformbaren Verdrängungskörper (256) ersetzt, der nur beispielhaft als Ausgangsform die Gestalt einer Kugel hat. Der Verdrängerkörper (256) hat einen E-Modul, der kleiner ist als 70000 N/mm². Die Verdrängerkörper können z.B. aus Aluminium, Zinn, Blei, einem Thermoplast oder einem vergleichbaren Werkstoff hergestellt sein.

Bei einem Einschrauben des Gewindestifts (27) wird der Verdrängerkörper (256) so zu einem Körper (257) deformiert, dass dieser fast die gesamte Radialbohrung ausfüllt. Zugleich wird er (257) auch in die Gewinderillen des Innengewindes (18) gepresst, wodurch das für eine Verdrehsicherung erforderliche Haltemoment entsteht. Nach einem Lösen der Gewindestifte ist ein wiederholtes Verdrehen des Schraubrings (23) möglich, da der Verdrängerkörper (257) das Innengewinde unmerklich oder nicht deformiert.

Abweichend vom dargestellten Ausführungsbeispiel, ist hier für den Gewindestift keine Kegelspitze erforderlich.

In den Figuren 13 bis 15 wird eine Verdrehsicherung in drei Ansichten dargestellt, bei der pro Verdrehsicherungsstelle das Außengewinde (24) des Schraubrings (23) im Wesentlichen in Radialrichtung gegenüber der Mittellinie (9) in das Innengewinde (18) der Biegeplatte (15) gepresst wird. Dazu weist der Schraubring (23) pro Verdrehsicherungsstelle neben einer Gewindebohrung (265) mit einer Kegelsenkung (266) eine partielle Radialnut (262) und einen Querschlitz (263) auf.

Die Radialnut (262) wird mit einem in Richtung der Mittellinie (9) erfolgenden Vorschub gefräst. Hierbei hat das entsprechende Werkzeug, ein Scheibenfräser, einen Durchmesser von z.B. 40 mm. Die Eindringtiefe der Radialnut (262) ist erreicht, wenn sie den Kerndurchmesser der Gewindebohrung (265) vollständig schneidet. Der kürzeste Abstand zwischen der Mittellinie der Gewindebohrung (265) und der Hüllfläche des Außengewindes (24) des Schraubrings (23) beträgt hier z.B. 2,85 mm. Wie bei allen anderen Gewindebohrungen (235, 245) verläuft auch die Mittellinie dieser Gewindebohrung (265) parallel zur Mittellinie (9).

Der ebenfalls mit einem Scheibenfräser erzeugte Querschlitz (263) ist mittig zur Mittellinie der Gewindebohrung (265) und senkrecht zur Radialnut (262) orientiert. Der Querschlitz (263) wird hier mit einem Scheibenfräser bearbeitet, der einen Durchmesser von z.B. 30 mm aufweist. Auf diese Weise wird die Gewindebohrung (265) nur minimal geschwächt. Der Querschlitz (263) und die Radialnut (262) haben jeweils eine Breite von z.B. 0,4 mm.

Die Eindringtiefe des Querschlitzes (263), vgl. Figur 15, ist so gewählt, dass der Querschlitz (263) zusammen mit der Radialnut (262) eine biegebalkenartige Klemmbrücke (261) im Schraubring (23) für jede Verdrehsicherungsstelle konkret freischneiden. Die freie Biegelänge der Klemmbrücke (261) misst im Ausführungsbeispiel ca. 12,5 mm.

In Figur 13 ist dargestellt, dass die obere Hälfte der Kegelsenkung (266), an deren Kegelstumpfmantelfläche der Kopf der Senkschraube (28) zur Anlage kommt, zu dieser Klemmbrücke (261) gehört. Sitzt die mit einer Kreuzschlitzausnehmung gezeigte Senkschraube (28) nur lose in der Gewindebohrung (265), haben die Hüllfläche des Außengewindes der unverformten Klemmbrücke (261), also des Außengewindeabschnitts (267), und die Hüllfläche des restlichen Außengewindes (24) die gleiche Raumkrümmung.

Wird zum Herstellen der Verdrehsicherungen die einzelne Senkschraube (28) festgeschraubt, drückt der Schraubenkopf der Senkschraube (28) den Außengewindeanschnitt (267) der Klemmbrücke (261) geringfügig radial nach außen in das Innengewinde (18) der Biegeplatte (15). Dadurch verklemmt sich Außengewindeanschnitt (267) festhaltend im Innengewinde (18). Der kegelstumpfförmige Kopf der Senkschraube (28) wirkt wie ein Keil. Hierbei stellt sich die Mittellinie der Senkschraube (28) im Rahmen des Gewindespiels und der elastischen Verformbarkeit der Schraube kalkulierbar minimal schräg zur Mittellinie der Gewindebohrung (265).

Nach dem Zusammenbau der Brems- und/oder Klemmvorrichtung und der Justierung des Schraubringes (23) liegen die Zangenbacken der Betätigungsbaugruppe (10), bei geklemmter Brems- und/oder Klemmvorrichtung, an einem Klemmflansch (62) des Kupplungsbereiches (61) einer Wellenanbindungsbaugruppe (60) an, vgl. Figuren 2 und 7. Die Reibflächen (31, 32) beider Zangenbacken (23, 29) haben nach innen gerichtete Flächennormalen (33). Letztere zeigen nach Figur 6 in Richtung der Mittenebene (7).

Anstelle der planen Reibflächen (31, 32), die zudem parallel zur Anbaufläche (3) orientiert sind, können die Reibflächen auch die Gestalt eines Kegelstumpfmantels oder eines Teilbereiches eines Torus haben.

Radial zur Mittellinie (9) hin wird der Spalt- bzw. Druckraum (37) durch eine Doppellippendichtung (50) abgeschlossen. Die aus z.B. einem Polyurethan mit einer Shore D-Härte von 57 gefertigte Doppellippendichtung (50) hat zwei radial nach außen orientierte Dichtlippen (51), die sich jeweils an den seitlichen Wandungen des Druckraumes (37) aufgrund der eigenen Elastizität und/oder zusätzlich durch den im Druckraum (37) anstehenden Innendruck anlegen. Die Bohrungswandung der Doppellippendichtung (50) liegt auf der glatten radialen Außenwandung des Kragringes (25) auf.

In den Figuren 1 und 3 bis 5 sind vier verschiedene Wellenanbindungsbaugruppen (80, 90, 100, 110) dargestellt. Die Figur 3 zeigt als Wellenanbindungsbaugruppe eine Anbindungsbaugruppe mit Axialmontageflansch (110). Bei dieser Variante besteht der Kupplungsbereich (61) aus einem Flanschkern (63), einem ringförmigen Körper, der radial außen den z.B. zentral angeformten Klemmflansch (62) trägt. Der z.B. 4,4 mm breite Klemmflansch (62) steht als umlaufender Steg vom Flanschkern (63) radial um z.B. 4 mm ab. Seine Stirnflächen bilden z.B. ebene Reibflächen (71, 72). Letztere sind in der Regel, wie auch die Reibflächen (31, 32) der Zangenbacken (23, 29), fein bearbeitet. Die Reibflächen (71, 72) haben nach außen gerichtete Flächennormalen (73), vgl. Figur 4. Entgegen der Richtung dieser Flächennormalen (73) ist die Klemmrichtung der Brems- und/oder Klemmvorrichtung orientiert.

Alternativ können die Reibflächen (31, 32) oder die Reibflächen (71, 72) eine Oberflächenstruktur aufweisen. Beispielsweise entsteht diese durch Sandstrahlen oder durch eine Diamant- oder Saphirbeschichtung. Derartige Beschichtungen weisen eine Schichtstärke von z.B. 0,038 mm auf. Die durchschnittliche Korngröße des Beschichtungsgrundmaterials liegt bei dieser Schichtstärke bei 30 µm.

Der Klemmflansch (62) geht in den Flanschkern (63) beidseitig über Entlastungskerben (65) über, vgl. Figur 6. Die Entlastungskerben (65) sind 2,8 mm breit, 0,65 mm tief und weisen beidseitig jeweils 1 mm-Radien auf.

Der Flanschkern (63) nach Figur 3 hat zur Ausbildung eines Axialmontageflansches (111) eine zentrale Stufenbohrung (112), die eine radiale Sitzfläche (113) und flanschbundseitig eine plane Bundfläche (114) trägt. Im Bereich des Axialmontageflansches (111) befinden sich mehrere zur Mittellinie (9) parallel angeordnete Bohrungen (115) mit Zylindersenkungen. In diesen Bohrungen (115) sitzen Schrauben (119), über die die Anbindungsbaugruppe (110) direkt mit der Welle (5) an deren Wellenbund (6) verschraubt ist.

Der Klemmflansch (62) kann ggf. auch Quernuten aufweisen, die bis an den Flanschgrund (64) reichen. Auf diese Weise stehen anstatt eines vollständig umlaufenden Klemmflansches (62) mehrere oder viele Klemmstege vom Flanschkern (63) radial ab, um zwischen die Zangenbacken (23, 29) hineinzuragen. Die Klemmstege können dabei - zur Beeinflussung des Vorrichtungsgeräusches - mit konstanter oder unregelmäßiger Teilung vom Flanschkern (63) abstehen.

Die Figuren 1, 2 und 6 zeigen eine Wellenanbindungsbaugruppe (80) mit einem Doppelradialspannflansch. Hier hat der Flanschkern (63) eine zentrale zylindrische Bohrung (66), in die mittig eine Nut (85) eingearbeitet ist, die einen z.B. rechteckigen Querschnitt hat. So entstehen zur Herstellung eines Spannmechanismus (76) im Wellenanbindungsbereich (75) zwei Spannflansche (81, 82). Die Nutbreite der dazwischen liegenden Nut (85) beträgt z.B. 7 mm bei einer Nuttiefe von z.B. 7,35 mm. Die Nut (85) hat zwei Ausrundungsradien von 1,5 mm. Zwischen der einzelnen Entlastungskerbe (65) und der nächstgelegenen Nutausrundung liegt ein Materialsteg (86) von 1,5 bis 2 mm Materialstärke. Der Flanschkern (63) ist im Bereich der Spannflansche (81, 82) so durchbohrt, vgl. auch Figur 6, dass sich nach der Figur 2 rechts von der Nut (85) paarweise viele Bohrungen (87) mit Kegelsenkung und links von der Nut (85) entsprechend viele Gewindebohrungen (88), z.B. M4, befinden. Im Ausführungsbeispiel sind 48 Schrauben (89) eingeschraubt.

Ggf. ist die Spannfläche (66), deren Innendurchmesser hier z.B. 260 mm beträgt, mit einer Diamant- oder Saphirbeschichtung ausgestattet, vgl. ggf. vorhandene Beschichtung der Reibflächen (31, 32) oder (71, 72). Anstelle der festhaftenden Beschichtung kann auch in die Montagefuge zwischen der Spannfläche (66) und der Wellenoberfläche eine Diamantpaste zum Verbessern der Haftung eingebracht werden. Alternativ kann die Spannfläche (66) und/oder die Wellenoberfläche im Sitzbereich des Flanschkerns (63) über eine Reibstruktur verfügen, die z.B. aufgelasert ist.

Werden nach dem Aufschieben der Vorrichtung auf die Welle (5) an dem vorgesehenen Einbauplatz die Schrauben (89) festgeschraubt, so werden die Spannflansche (81, 82) gegeneinander gezogen. Hierdurch legen sich aufgrund der gelenkartigen Nachgiebigkeit der Materialstege (86) des Flanschkerns (63) die Spannflansche (81, 82) über die Tragkanten (83), vgl. Figur 6, primär unter radialer Verspannung fest an.

Eine alternative Wellenanbindungsbaugruppe ist in Figur 4 dargestellt. Sie zeigt eine Anbindungsbaugruppe (100) mit Verdrängerspannhülse. Hier weist der Flanschkern (63) als Wellenanbindungsbereich (75) eine umlaufende Stirnnut (102) auf, die nach Figur 4 von der rechten Stirnseite aus in den Flanschkern (63) eingearbeitet ist. In die außenliegende Wandung der Stirnnut (102) ist, z.B. 7 mm tief, ein Feingewinde (103) eingeschnitten. Zur Welle (5) bzw. zur Bohrung (66) hin bleibt eine elastische, z.B. 1,4 mm dicke, Klemmhülsenwandung (101) der Verdrängerspannhülse stehen.

In die Stirnnut (102) ist als Verdrängerkörper ein ringförmiger Elastomerkörper (104) eingesetzt. Seine Breite überdeckt 55 bis 70% der Flanschkernbreite. Seine Wandstärke misst z.B. 5 mm. Zur Herstellung eines klemmenden Spannmechanismus (76) wird bei der Montage der Anbindungsbaugruppe (100) auf die Welle (5) in das Innengewinde (103) ein Gewindering (105), z.B. mittels eines Zapfenschlüssels, eingeschraubt. Der Elastomerkörper (104) wird so verdichtet, dass sich die Klemmhülsenwandung (101) verdrehfest an die Welle (5) anschmiegt.

Der Elastomerkörper (104) ist beispielsweise aus dem Acrylnitril-Butadien-Kautschuk NBR hergestellt. Seine Härte in Shore A liegt zwischen 64 und 68.

Die Figur 5 zeigt einen Teilschnitt einer Wellenanbindungsbaugruppe (90) mit einer Schrumpfscheibenverbindung. Hier ist der Flanschkern (63) ein relativ dünner Ring, der sich beidseitig nach außen im Durchmesser verjüngt. Rechts und links von dem zentralen Klemmflansch (62) weist er als radiale Außenwandung zwei Kegelstumpfmäntel (91) auf. Der zentrale Klemmflansch (62) ragt hier ca. 11,5 mm in Radialrichtung über die Kegelstumpfmäntel (91) über.

Auf diesen Kegelstumpfmänteln (91) sitzen beidseitig die Ringkegelspannelemente (93, 94) auf, um zusammen mit dem Flanschkern (63) eine als Spannmechanismus dienende Schrumpfscheibe zu bilden. Die Ringkegelspannelemente (93, 94) sind Ringe, deren zentrale Ausnehmungen (92) konisch passend zu den Kegelstumpfmänteln (91) gestaltet sind. Der Konuswinkel beträgt z.B. 5 Winkelgrade. Um Platz für die Zangenbacken (23, 29) der Betätigungsbaugruppe (10) zu lassen, sind die Ringkegelspannelemente (93, 94) jeweils an den Stirnseiten, die zum Klemmflansch (62) hin orientiert sind, mit z.B. an der engsten Stelle ca. 4,3 mm breiten und 10 mm tiefen Eindrehungen (97) versehen. Die Breite der Eindrehungen (97) vergrößert sich mit zunehmendem Radius stetig.

Beide Ringkegelspannelemente (93, 94) tragen koaxiale Bohrungen (95, 96) für die Schrauben (99), mit denen die Ringkegelspannelemente (93, 94) unter axialer und radialer Verspannung gegen den dünnwandigen Flanschkern (63) gepresst werden. Das nach Figur 5 linke Ringkegelspannelement (93) weist dazu eine Gewindebohrung (96) auf, während das rechte Ringkegelspannelement (94) mit einer Bohrung (95) mit Zylindersenkung versehen ist. Die Schrumpfscheibe hat z.B. 24 Schrauben (99). Alle Schrauben durchqueren auch den Klemmflansch (62) zwischen den Reibflächen (31, 32) und dem Flanschkern (63), der zu den Bohrungen (95, 96) eine konzentrische Bohrung (98) aufweist.

Ausgeliefert wird diese Brems- und/oder Klemmvorrichtung in Kombination mit der gewählten Wellenanbindungsbaugruppe (80, 90, 100, 110). Dabei sitzt die jeweilige Wellenanbindungsbaugruppe (80, 90, 100, 110) koaxial in der Betätigungsbaugruppe (10). Für die Montage in der die Vorrichtung aufnehmenden Maschine wird die Wellenanbindungsbaugruppe (80, 90, 100, 110) auf die Welle (5) geschoben und dort direkt an der Anbaufläche (3) des Grundkörpers (1) anstehend - in der Regel lösbar - befestigt. Abschließend werden die Befestigungsschrauben (59) in die entsprechenden grundkörperseitigen Bohrungen eingesetzt und dort verschraubt.

Steht im Druckraum (37) kein Hydraulikölbetriebsdruck an, so ist die Welle (5) gegenüber dem Grundkörper (1) festgeklemmt. Der Druckraum (37) weist keinen nennenswerten Öldruck auf, da der Ölzulauf über ein nicht dargestelltes Ventil in den Öltank entlastet ist. Die Biegeplatten (15, 16) liegen vorgespannt über ihre Zangenbacken (23, 29) am Klemmflansch (62) an, vgl. Figur 2. Die Vorspannung ergibt sich aus der Federrate der vorgebeulten Biegeplatten (15, 16). Die Höhe der Federrate ist eine Funktion der ringscheibenseitigen Werkstoffauswahl und der Geometrie der Biegezone (21). Das erzeugte Brems- bzw. Haltemoment liegt bei den Ausführungsbeispielen bei 3000 ± 200 Nm.

Die Biegeplatten (15, 16) befänden sich nur dann im vollständig entspannten Zustand, wenn kein Klemmflansch (62) zwischen den Zangenbacken (23, 29) läge. Dann wäre im Ausführungsbeispiel der Druckraum (37) ein Spaltraum mit konstanter Spaltbreite.

Um die Brems- und/oder Klemmvorrichtung zu lösen, wird z.B. über den Hydraulikadapter (56), vgl. Figur 3, der Öldruck im Druckraum (37) auf z.B. 100 bis 150 ^{∗} 10⁵ Pa erhöht. Vom Hydraulikadapter (56) aus pflanzt sich die Druckerhöhung über die Verteilbohrungen (42) und (43) in den Druckraum (37) fort. Die Biegeplatten (15, 16) beulen in den elastischen Biegezonen (21), vgl. Figur 3. Dabei wandert jede Klemmzone (22) gegenüber der ortsfest bleibenden Anbauzone (13) im Wesentlichen in Axialrichtung nach außen. Die Zangenbacken (23, 29) heben in Richtung der Pfeile (47) vom Klemmflansch (62) ab. Die betätigungsbaugruppenseitigen Reibflächen (31, 32) entfernen sich von den wellenanbindungsbaugruppenseitigen Reibflächen (71, 72), so dass zwischen der Welle (5) und dem Grundkörper (1) kein Kontakt mehr besteht. Das Lüftspiel pro Reibflächenpaarung (31) zu (71) und (32) zu (72), also der Abstand zwischen den zuvor sich kontaktierenden Reibflächen, beträgt nun zwischen 0,3 und 0,5 mm. Die Vorrichtung ist auf 5 bis 10 Millionen Öffnungs- bzw. Schließzyklen ausgelegt.

Kombinationen der in den Figuren gezeigten Ausführungsbeispiele und deren Varianten sind denkbar.

### Bezugszeichenliste:

- 1: Grundkörper
- 2: Zentrierung, Außenzentrierung
- 3: Anbaufläche von (1)
- 4: Bohrung, zentral von (10)
- 5: Welle
- 6: Wellenbund
- 7: Mittenebene
- 8: fiktive Achse, vertikal
- 9: Mittellinie der Vorrichtung, zentral

- 10: Betätigungsbaugruppe
- 11: Spaltgehäuse, bereichsweise beulbar
- 12: Vorderseite, Stirnseite
- 13: Anbauzone
- 14: Außenwandung, Stirnwandung, Stirnseite
- 15: Biegeplatte, außen, klein
- 16: Biegeplatte, innen, groß
- 17: Axialnut in (15)
- 18: Innengewinde, Feingewinde

- 21: Biegezone, beulbar, elastisch
- 22: Klemmzonen
- 23: Zangenbacke, angeschraubt, Verstellring, Schraubring
- 24: Außengewinde, Feingewinde
- 25: Kragring
- 26: Gewindestift mit Kegelkuppe
- 27: Gewindestift mit Spitze
- 28: Senkschraube, Spreizschraube
- 29: Zangenbacken, angeformt

- 31, 32: Reibflächen
- 33: Flächennormalen von (31, 32)
- 34: Stirnfläche von (23)
- 37: Druckraum; Spaltraum; Nut

- 41: Zulaufgewindebohrungen
- 42: Verteilbohrung, radial
- 43: Verteilbohrung, axial
- 45: Bohrungen mit Senkungen, Durchgangsbohrungen, Befestigungsbohrungen
- 47: Pfeile, Bewegungsrichtung
- 48: Hydraulikölzulauf
- 49: Schneidring

- 50: Doppellippendichtung, Dichtring
- 51: Dichtlippen
- 52: Verschlussstopfengewindebohrung
- 53: Klemmbüchse
- 54: Stauchkugel
- 55: Verschlussstopfen
- 56: Hydraulikadapter
- 59: Befestigungsschrauben

- 60: Wellenanbindungsbaugruppe
- 61: Kupplungsbereich
- 62: Klemmflansch, zentral
- 63: Flanschkern
- 64: Flanschgrund
- 65: Entlastungskerben
- 66: Bohrung, zentral; Spannfläche von (60)
- 71, 72: Reibflächen
- 73: Flächennormalen von (71, 72)
- 75: Wellenanbindungsbereich
- 76: Spannmechanismus

- 80: Wellenanbindungsbaugruppe mit Doppelradialspannflansch
- 81, 82: Spannflansch, radial; links, rechts
- 83: Tragkanten
- 85: Nut
- 86: Materialsteg
- 87: Bohrung mit Kegelsenkung
- 88: Gewindebohrung
- 89: Schraube, Zylinderkopfschraube

- 90: Wellenanbindungsbaugruppe mit Schrumpfscheibenverbindung
- 91: Kegelstumpfmäntel, Außenwandungen, radial; Konen
- 92: Ausnehmungen, zentral in (93, 94)
- 93, 94: Ringkegelspannelemente
- 95: Bohrung mit Senkung
- 96: Gewindebohrung
- 97: Eindrehung
- 98: Bohrung in (62)
- 99: Schrauben

- 100: Wellenanbindungsbaugruppe mit Verdrängerspannhülse
- 101: Klemmhülsenwandung
- 102: Stirnnut, Ausnehmung für (104) und (105)
- 103: Innengewinde, Feingewinde
- 104: Elastomerkörper, Gummikörper, Verdrängerkörper
- 105: Gewindering

- 110: Wellenanbindungsbaugruppe mit Axialmontageflansch
- 111: Axialmontageflansch
- 112: Stufenbohrung
- 113: Sitzfläche, radial
- 114: Bundfläche, plan
- 115: Bohrungen für (119)
- 119: Schrauben

- 231: Radialsteg, umlaufend oder partiell
- 232: Radialnut, außen, gewindestiftnahe
- 233: Abstützflanke
- 234: Radialnut, innen
- 235: Gewindebohrung
- 237: Außengewinde des Radialstegs, Außengewindeabschnitt

- 241: Radialbohrung
- 244: Kegelspitze
- 245: Gewindebohrung

- 246: Kugel, formsteif; Stahlkugel, Umlenkkörper, Einstauchkörper

- 256: Verdrängungskörper, Kugel, verformbar;
- 257: Verdrängungskörper, verformt

- 261: Klemmbrücke
- 262: Radialnut, partiell
- 263: Querschlitz
- 265: Gewindebohrung
- 266: Kegelsenkung
- 267: Außengewinde der Klemmbrücke, Außengewindeabschnitt

## Patentansprüche

1. Brems- und/oder Klemmvorrichtung für eine gegenüber einem Grundkörper (1) geführte Welle (5) mit einer Betätigungsbaugruppe (10) und mit einer Wellenanbindungsbaugruppe (60),
- wobei die Betätigungsbaugruppe (10) ein Spaltgehäuse (11) aufweist, das eine Anbauzone (13) und eine bereichsweise elastisch beulbare Biegezone (21) mit zwei durch einen Spaltraum (37) getrennten Biegeplatten (15, 16) hat,
- wobei die Biegeplatten (15, 16) in zwei einander gegenüberliegenden Klemmzonen (22) jeweils Zangenbacken (23, 29) mit Reibflächen (31, 32) aufweisen, deren Flächennormalen (33) nach innen gerichtet sind,
- wobei zwischen den Biegeplatten (15, 16) ein abgedichteter Druckraum (37) liegt, der zum elastischen Auseinanderdrücken der Reibflächen (31, 32) mit einem Druckmedium befüllbar ist,
- wobei die Wellenanbindungsbaugruppe (60) einen Kupplungsbereich (61) aufweist, der zwei voneinander beabstandete Reibflächen (71, 72) hat, deren Flächennormalen (73) nach außen weisen,
- wobei die Wellenanbindungsbaugruppe (60) einen Wellenanbindungsbereich (75) aufweist,
- wobei der Wellenanbindungsbereich (75) entweder direkt oder indirekt über einen Spannmechanismus (76) am Kupplungsbereich (61) angeordnet ist und
- wobei bei entlastetem Druckraum (37) die Reibflächen (31, 32) der Betätigungsbaugruppe (10) an den Reibflächen (71, 72) der Wellenanbindungsbaugruppe (60) unter Bereitstellung der Klemm- und/oder Bremskraft anlegbar sind, **dadurch gekennzeichnet, dass** mindestens eine Zangenbacke ein an der jeweiligen Biegeplatte (15) in der Klemmrichtung der Vorrichtung einstellbar angeordneter - einen axial abstehenden Kragring (25) aufweisender - fixierbarer Verstellring (23) ist.

2. Brems- und oder Klemmvorrichtung gemäß Anspruch 1, **dadurch gekennzeichnet, dass** der mindestens eine Verstellring (23) ein an der jeweiligen Biegeplatte (15) anschraubbarer Schraubring ist.

3. Brems- und oder Klemmvorrichtung gemäß Anspruch 2, **dadurch gekennzeichnet, dass** in der Montage- und Verstellfuge zwischen der Biegeplatte (15) und dem Schraubring (23) ein Feingewinde angeordnet ist, wobei die Biegeplatte (15) das Innengewinde (18) und der Schraubring (23) das Außengewinde (24) aufweist.

4. Brems- und oder Klemmvorrichtung gemäß Anspruch 3, **dadurch gekennzeichnet, dass** das Außengewinde (24) des Schraubrings (23) einen Außengewindeabschnitt (237, 267) aufweist, der - zur Verdrehsicherung des Schraubrings (23) innerhalb der Biegeplatte (15) - gegenüber dem Innengewinde (18) der Biegeplatte (15) parallel oder quer zur Einschraubrichtung des Schraubrings (23) verspannbar ist.

5. Brems- und oder Klemmvorrichtung gemäß Anspruch 3, **dadurch gekennzeichnet, dass** im oder am Außengewinde (24) des Schraubrings (23) ein umlaufender - ebenfalls mit einem Außengewinde (237) ausgestatteter - Radialsteg (231) separiert ist, dessen Gewinde, wie das Außengewinde (24), in das Innengewinde (18) eingreift, wobei der Radialsteg (231) gegenüber dem Schraubring (23) verschieb- oder verformbar angeordnet ist.

6. Brems- und oder Klemmvorrichtung gemäß Anspruch 1, **dadurch gekennzeichnet, dass** der mindestens eine Verstellring (23) gegenüber der jeweiligen Biegeplatte (15) mittels mindestens drei Einstauchkörper (246) räumlich formschlüssig festlegbar ist.

7. Brems- und oder Klemmvorrichtung gemäß Anspruch 6, **dadurch gekennzeichnet, dass** der Einstauchkörper (246) eine formsteife Kugel ist, die mittels eines angespitzten Gewindestifts (27) nach dem Schiebekeilprinzip in Radialrichtung gegen die Biegeplatte (15) spannbar ist.

8. Brems- und oder Klemmvorrichtung gemäß Anspruch 1, **dadurch gekennzeichnet, dass** der mindestens eine Verstellring (23) gegenüber der jeweiligen Biegeplatte (15) mittels mindestens drei Verdrängungskörper (256) räumlich kraftschlüssig festlegbar ist.

## Claims

1. Braking and/or clamping device for a shaft (5) guided relative to a base body (1) comprising an actuating assembly (10) and a shaft connection assembly (60),
- wherein the actuating assembly (10) has a split housing (11) which has a mounting zone (13) and a bending zone (21) which is elastically deformable in some regions and has two bending plates (15, 16) separated by a gap space (37),
- wherein, in two opposite clamping zones (22), the bending plates (15, 16) each have clamping jaws (23, 29) with friction surfaces (31, 32), whose surface normals (33) are directed inwards,
- wherein a sealed pressure chamber (37), which is fillable with a pressure medium for elastically pushing the friction surfaces (31, 32) apart, lies between the two bending plates (15, 16),
- wherein the shaft connection assembly (60) has a coupling region (61) which has two friction surfaces (71, 72) spaced apart from one another and whose surface normals (73) are directed outward,
- wherein the shaft connection assembly (60) has a shaft connection region (75),
- wherein the shaft connection region (75) is arranged either directly or indirectly on the coupling region (61) via a clamping mechanism (76),
- wherein, when the pressure space (37) is released, the friction surfaces (31, 32) of the actuating assembly (10) can be applied to the friction surfaces (71, 72) of the shaft connection assembly (60) to provide the clamping and/or braking force, **characterized in that** at least one clamping jaw is a fixable adjusting ring (23) - having an axially projecting bearing ring (25) - adjustably arranged on the respective bending plate (15) in the clamping direction of the device.

2. Braking and/or clamping device according to claim 1, **characterized in that** the at least one adjusting ring (23) is a screw ring, which can be screwed on the respective bending plate (15).

3. Braking and/or clamping device according to claim 2, **characterized in that** a fine-pitch thread is arranged in the mounting and adjusting joint between the bending plate (15) and the screw ring (23), wherein the bending plate (15) has the internal thread (18) and the screw ring (23) has the external thread (24).

4. Braking and/or clamping device according to claim 3, **characterized in that** the external thread (24) of the screw ring (23) has an external thread section (237, 267) which - for securing the screw ring (23) against rotating within the bending plate (15) -can be clamped, with respect to the internal thread (18) of the bending plate (15), parallel or perpendicular to the screw-in direction of the screw ring (23).

5. Braking and/or clamping device according to claim 3, **characterized in that** a circumferential radial web (231) - likewise equipped with an external thread (237) - is separated in or on the external thread (24) of the screw ring (23), the threads of said radial web engage, like the external thread (24), into the internal thread (18), wherein the radial web (231) is arranged to be displaceable or deformable with respect to the screw ring (23).

6. Braking and/or clamping device according to claim 1, **characterized in that** the at least one adjusting ring (23) can be fixed in a spatially positive-locking manner with respect to the respective bending plate (15) by means of at least three compression bodies (246).

7. Braking and/or clamping device according to claim 6, **characterized in that** the compression body (246) is a dimensionally stable ball, which can be clamped in the radial direction against the bending plate (15) by means of a pointed threaded pin (27) according to the sliding wedge principle.

8. Braking and/or clamping device according to claim 1, **characterized in that** the at least one adjusting ring (23) can be fixed in a spatially positive-locking manner with respect to the respective bending plate (15) by means of at least three displacement bodies (256).

## Revendications

1. Dispositif de freinage et/ou de serrage d'un arbre (5) guidé par rapport à un corps de base (1), pourvu d'un ensemble d'actionnement (10) et d'un ensemble de raccordement sur l'arbre (60),
- l'ensemble d'actionnement (10) comportant un carter à fentes (11) qui détient une zone de montage (13) et une zone de flexion (21) susceptible d'être élastiquement bosselée par endroits, comprenant deux plaques de flexion (15, 16) séparées par un interstice (37),
- les plaques de flexion (15, 16) comportant dans deux zones de serrage (22) mutuellement opposées respectivement des mâchoires de pince (23, 29) pourvues de surfaces de friction (31, 32), dont les normales à la surface (33) sont dirigées vers l'intérieur,
- entre les plaques de flexion (15, 16) se situant un espace sous pression (37) hermétique, qui pour expanser élastiquement les surfaces de friction (31, 32) peut se remplir d'un milieu sous pression,
- l'ensemble de raccordement sur l'arbre (60) comportant une portion d'accouplement (61), qui dispose de deux surfaces de friction (71, 72) écartées l'une de l'autre, dont les normales à la surface (73) montrent vers l'extérieur,
- l'ensemble de raccordement sur l'arbre (60) comportant une portion de raccordement sur l'arbre (75),
- la portion de raccordement sur l'arbre (75) étant placée soit directement ou indirectement par l'intermédiaire d'un mécanisme de contrainte (76) sur la portion d'accouplement (61) et
- lorsque l'espace sous pression (37) est déchargé, les surfaces de friction (31, 32) de l'ensemble d'actionnement (10) pouvant s'appliquer sur les surfaces de friction (71, 72) de l'ensemble de raccordement sur l'arbre (60) en mettant à disposition la forme de serrage et/ou de freinage, **caractérisé**
**en ce qu'**au moins une mâchoire de pince est un anneau d'ajustement (23) susceptible d'être fixé, placé de manière réglable dans le sens de serrage du dispositif sur la plaque de flexion (15) respective, comportant un anneau en collerette (25), débordant dans la direction axiale.

2. Dispositif de freinage et/ou de serrage selon la revendication 1, **caractérisé en ce que** l'au moins un anneau d'ajustement (23) est un anneau fileté, susceptible d'être vissé sur la plaque de flexion (15) respective.

3. Dispositif de freinage et/ou de serrage selon la revendication 2, **caractérisé en ce que** dans le joint de montage ou de réglage entre la plaque de flexion (15) et l'anneau fileté (23) est placé un filetage fin, la plaque de flexion (15) comportant le taraudage (18) et l'anneau fileté (23) comportant le filetage (24).

4. Dispositif de freinage et/ou de serrage selon la revendication 3, **caractérisé en ce que** le filetage (24) de l'anneau fileté (23) comporte un tronçon de filetage (237, 267), qui - pour le blocage en rotation de l'anneau fileté (23) est susceptible d'être contraint à l'intérieur de la plaque de flexion (15) - par rapport au taraudage (18) de la plaque de flexion (15), à la parallèle ou à la transversale du sens de vissage de l'anneau fileté (23).

5. Dispositif de freinage et/ou de serrage selon la revendication 3, **caractérisé en ce que** dans ou sur le filetage (24) de l'anneau fileté (23) est séparée une barrette radiale (231) - également équipée d'un filetage (237) -, dont le filet, tout comme le filetage (24) s'engage dans le taraudage (18), la barrette radiale (231) étant placé en étant déplaçable ou déformable par rapport à l'anneau fileté (23).

6. Dispositif de freinage et/ou de serrage selon la revendication 1, **caractérisé en ce que** l'au moins un anneau d'ajustement (23) est susceptible d'être immobilisé dans l'espace par complémentarité de forme par rapport à la plaque de flexion (15) respective, au moyen d'au moins trois organes de refoulement (246).

7. Dispositif de freinage et/ou de serrage selon la revendication 6, **caractérisé en ce que** l'organe de refoulement (246) est une sphère indéformable, qui au moyen d'une tige filetée (27) taillée est susceptible d'être contrainte dans la direction radiale contre la plaque de flexion (15) selon le principe de la cale coulissante.

8. Dispositif de freinage et/ou de serrage selon la revendication 1, **caractérisé en ce que** l'au moins un anneau d'ajustement (23) est susceptible d'être immobilisé dans l'espace par complémentarité de forme par rapport à la plaque de flexion (15) respective au moyen d'au moins trois organes de répression (256).
